# EUROPÄISCHE PATENTSCHRIFT

(11) **EP 1 258 969 B1**
(45) Veröffentlichungstag und Bekanntmachung des Hinweises auf die Patenterteilung: **03.10.2007**
(21) Anmeldenummer: 01112235.5
(22) Anmeldetag: 18.05.2001
(51) Int. Cl.: H02K 7/102, F16D 59/00, F16D 51/10

(54) **Stellantrieb mit einer Fliehkraftbremse**
Actuar with a centrifugal brake
Actionneur avec frein centrifuge

(43) Veröffentlichungstag der Anmeldung: 20.11.2002
(73) Patentinhaber: Siemens Schweiz AG, 8047 Zürich (CH)
(72) Erfinder: Bucher, Johannes, 8862 Schübelbach (CH)
(74) Vertreter: Weise, Wolfgang

(56) Entgegenhaltungen:
- EP-A- 0 943 831
- GB-A- 1 492 631
- US-A- 5 662 542

## Beschreibung

Die Erfindung bezieht sich auf einen Stellantrieb der im Oberbegriff des Anspruchs 1 genannten Art und weiter auf ein Stellglied mit dem Stellantrieb und auf einen Elektromotor gemäss Oberbegriff des Anspruchs 7 oder 8.

Eine derartige Antriebsvorrichtung wird vorteilhaft in Heizungs-, Lüftungs- und Klimaanlagen zur Betätigung von Stellgliedern wie Ventilen oder Klappen und dergleichen verwendet. Ein Elektromotor der Antriebsvorrichtung ist beispielhaft mit einem Zweipunktregler ansteuerbar, wobei der Elektromotor im Zustand "Ein" eingeschaltet ist und das Stellglied entgegen der Kraft einer Rückstellfeder in eine erste Richtung betätigt wird. Im Zustand "Aus" ist der Elektromotor ausgeschaltet, so dass die Rückstellfeder das Stellglied entgegen der ersten Richtung betätigt.

Bekannte derartige Antriebsvorrichtungen haben den Nachteil, dass im Zustand des ausgeschalteten Elektromotors durch die Rückstellfeder in der Antriebsvorrichtung relativ hohe Drehzahlen generiert werden, durch welche insbesondere störende mechanische Schwingungen und Geräusche entstehen.

Aus EP 297 453 A1 ist eine Fliehkraftbremse für Stellantriebe mit Rückstellfunktion bekannt, welche an einen Wellenzapfen einer Getriebestufe ankoppelbar ist. Durch die Fliehkraftbremse soll eine Beschädigung des Antriebs bei der Entspannung einer Rückstellfeder vermieden werden.

Der Erfindung liegt die Aufgabe zugrunde, einen Stellantrieb vorzuschlagen bei dem eine gewisse Drehzahl nicht überschritten wird, so dass störende mechanische Schwingungen und Geräusche vermieden werden, und der in seinem Aufbau möglichst wenig Platz beansprucht.

Die genannte Aufgabe wird erfindungsgemäss durch die Merkmale des Anspruchs 1, 6, 7 oder 8 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

### Es zeigen:

- Fig. 1: Eine schematische Darstellung eines Stellantriebs mit Funktionsblöcken,
- Fig. 2: eine Explosionsdarstellung des Stellantriebs,
- Fig. 3: eine Explosionsdarstellung einer Variante des Stellantriebs, und
- Fig. 4: ein Teil der Variante des Stellantriebs in montiertem Zustand.

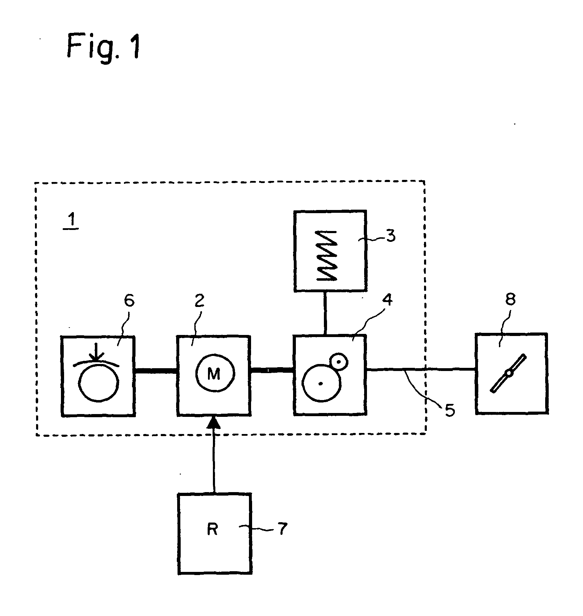

In der Fig. 1 bedeutet 1 einen Stellantrieb, der einen Elektromotor 2, eine als mechanischer Energiespeicher wirkende Rückstellfeder 3, ein Getriebe 4, ein Übertragungselement 5 und eine Fliehkraftbremse 6 aufweist. Der Elektromotor 2 ist über eine Steuer- oder Regeleinrichtung 7 ein- und ausschaltbar, wobei die Steueroder Regeleinrichtung 7 beispielhaft als Zweipunktregler, im einfachsten Fall jedoch durch einen elektrischen Schalter verwirklicht ist.

Der Stellantrieb 1 dient zur Betätigung eines Stellgliedes 8, welches zu diesem Zweck mit dem Übertragungselement 5 des Stellantriebs 1 verbunden ist. Das Stellglied 8 ist beispielhaft ein Ventil oder eine Klappe.

Der Elektromotor 2, die Rückstellfeder 3 und das Übertragungselement 5 sind über das Getriebe 4 mechanisch derart miteinander gekoppelt und verbunden, dass das mit dem Übertragungselement verbundene Stellglied 8 in einer ersten Bewegungsrichtung durch den von der Steuer- oder Regeleinrichtung 7 aktivierten Elektromotor 2 und in einer zweiten Bewegungsrichtung durch die Rückstellfeder 3 betätigbar ist. Die Rückstellfeder 3 wird durch den eingeschalteten Elektromotor 2 aufgezogen, wenn das Stellglied 8 in der ersten Bewegungsrichtung betätigt wird.

Das Getriebe 4 ist mit Vorteil so ausgelegt, dass zwischen dem Elektromotor 2 und dem Übertragungselement 5 und auch zwischen dem Elektromotor 2 und der Rückstellfeder 3 wenigstens eine Getriebestufe wirksam ist.

Mit Vorteil wirkt das Getriebe 4 vom Elektromotor 2 aus gesehen als Untersetzung, so dass am Stellglied 8 die notwenigen Kräfte erreichbar sind, wobei am Läufer des Elektromotors 2 die grössten Winkelgeschwindigkeiten auftreten. Erfindungsgemäss ist die Fliehkraftbremse 6 am Läufer oder Rotor des Elektromotors 2 angeordnet, so dass die Fliehkraftbremse 6 mit der Winkelgeschwindigkeit des Läufers bewegt wird. Dadurch, dass das Getriebe 4 vom Elektromotor 2 aus gesehen als Untersetzung wirkt, ist die Fliehkraftbremse 6 - vorteilhafterweise mit Hilfe einer entsprechend dimensionierten Vorspannfeder - derart einstellbar, dass eine Bremswirkung nur dann auftritt, wenn das Stellglied 8 in der zweiten Bewegungsrichtung - also durch die Rückstellfeder 3 angetrieben - betätigt wird. Für die erste Bewegungsrichtung hingegen, also wenn das Stellglied 8 durch den Elektromotor 2 angetrieben wird, ist die Fliehkraftbremse 6 vorteilhafterweise so auszulegen, dass keine Bremswirkung auftritt.

Der Elektromotor 2 ist vorzugsweise ein Synchronmotor, damit im eingeschalteten Zustand eine konstante Drehzahl vorliegt, womit das zeitliche Verhalten einer Stellbewegung in der ersten Bewegungsrichtung genau definiert ist.

In einem typischen Aufbau des Stellantriebs kann die Drehzahl des Läufers beim Aufziehen der Rücklauffeder beispielsweise 500 Umdrehungen pro Minute betragen. Beim Zurücklaufen der aufgezogenen Rücklauffeder im ausgeschalteten Zustand des Elektromotors wird die Drehzahl des Läufers durch die Fliehkraftbremse auf etwa 1000 Umdrehungen pro Minute begrenzt, während ohne Fliehkraftbremse typischerweise mehrere Tausend Umdrehungen pro Minute erreicht würden, was störende Schwingungen und Geräusche verursachen würde.

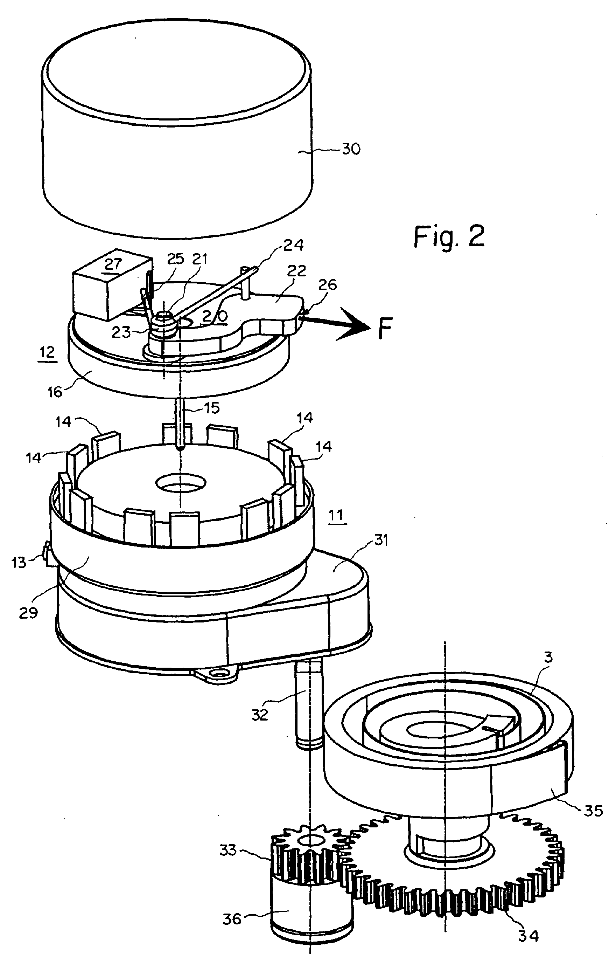

In der Fig. 2 ist mit 11 ein Stator und mit 12 ein Läufer des Elektromotors 2 (Fig. 1) bezeichnet. Der Stator 11 weist elektrische Anschlüsse 13 und mehrere Pole 14 für ein magnetisches Drehfeld auf. Der Läufer 12 ist beispielhaft eine mit einer Rotorwelle 15 drehbar gelagerte Rotorscheibe mit einem Rand 16, an dessen Innenseite in der Zeichnung nicht dargestellte magnetische Rotorpole angeordnet sind.

Die Fliehkraftbremse 6 (Fig. 1) ist erfindungsgemäss am Läufer 12 angeordnet und mit dem Läufer 12 verbunden. In einer ersten Ausführungsvariante 20 weist die Fliehkraftbremse einen um einen Lagerdorn 21 schwenkbar gelagerten Bremskörper 22 auf, wobei der Lagerdorn 21 am Läufer 12 exzentrisch angeordnet ist. Mit Vorteil ist der Bremskörper 22 mit einer Vorspannfeder 23 gekoppelt. Die Vorspannfeder 23 ist derart ausgelegt und vorgespannt angeordnet, dass der Bremskörper 22 erst ab einer gewissen Winkelgeschwindigkeit ωᵣ des Läufers durch eine auf den Bremskörper 22 wirkende Zentrifugalkraft F gegen die Kraft der Vorspannfeder 23 ausschwenkbar ist.

Die Vorspannfeder 23 ist beispielsweise als Schenkelfeder verwirklicht, welche am Lagerdorn 21 angeordnet ist, wobei ein erster Schenkel 24 der Schenkelfeder am Bremskörper 22 und ein zweiter Schenkel 25 am Läufer 12 angreift.

Mit Vorteil weist der Bremskörper 22 einen Bremsbelag 26 auf, der im Bereich der Kontaktfläche zwischen dem Bremskörper 22 und einer Bremstrommel 30 angeordnet ist.

Der insbesondere durch den Bremskörper 22 asymmetrisch zur Achse der Rotorwelle 15 aufgebaute Läufer 12 wird vorteilhafterweise durch ein in der Fig. 2 schematisch dargestelltes Ausgleichsgewicht 27 ausgewuchtet.

Ein besonders einfacher und platzsparender Aufbau des Stellantriebs 1 ist erreichbar, wenn die Bremstrommel 30 zugleich ein Teil der Abdeckung des Elektromotors 2 ist, durch den wenigstens der Läufer 12 und die Fliehkraftbremse 20 abdeckbar sind. Die vorteilhafterweise als Deckel ausgebildete Bremstrommel 30 ist beispielhaft an einer Statorabdeckung 29 befestigt.

Eine mit dem Stator 11 verbundene Getriebebox 31 weist eine die Rotorwelle 15 mit einer Abgangswelle 32 koppelnde Getriebestufe des Getriebes 4 (Fig. 1) auf.

Die beispielhaft als Rollfeder implementierte Rückstellfeder 3 ist hier über eine ein Ritzel 33 und ein Zahnrad 34 aufweisende weitere Getriebestufe des Getriebes 4 (Fig. 1) gekoppelt, wobei das Ritzel 33 mit der Abgangswelle 32 verbunden ist. Ein Ende 35 der Rückstellfeder 3 ist vorteilhafterweise mit der Getriebebox 31 verbunden.

Das Übertragungselement 5 (Fig. 1) ist beispielhaft durch die Abgangswelle 32 oder durch eine auf die Abgangswelle 32 aufgezogene Nabe 36 verwirklicht.

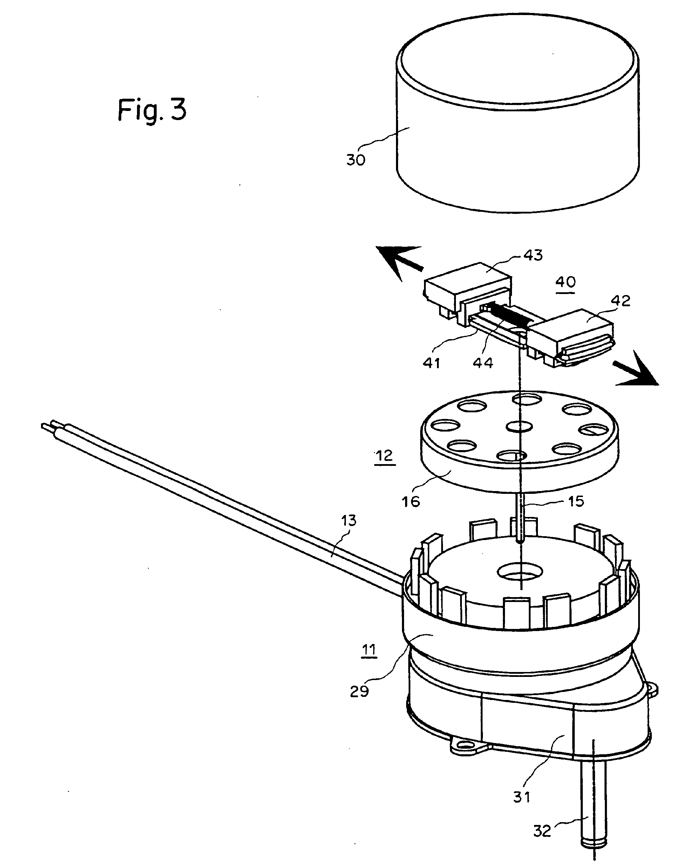

Die in der Fig. 3 dargestellte Variante des Stellantriebs zeigt oben bereits beschriebene Funktionselemente des Stellantriebs 1 wie den Stator 11 mit den elektrischen Anschlüssen 13 und der Statorabdeckung 29, die Getriebebox 31 mit der Abgangswelle 32, den Läufer 12 mit der Rotorwelle 15 und dem Rand 16 sowie die Bremstrommel 30.

Eine zweite Ausführungsvariante 40 der Fliehkraftbremse 6 (Fig. 1) ist erfindungsgemäss mit dem Läufer 12 verbunden. Die Fliehkraftbremse 40 weist eine Führungsschiene 41 und auf der Führungsschiene 41 verschiebbar angeordnete Bremskörper 42 und 43 auf, welche über eine Zugfeder 44 vorgespannt und miteinander gekoppelt sind. Die Zugfeder 44 ist derart ausgelegt und vorgespannt angeordnet, dass die Bremskörper 42 und 43 erst ab einer gewissen Winkelgeschwindigkeit ωᵣ des Läufers durch eine auf die Bremskörper 42 und 43 wirkende Zentrifugalkraft gegen die Kraft der Zugfeder 44 an die Bremstrommel 30 gedrückt werden.

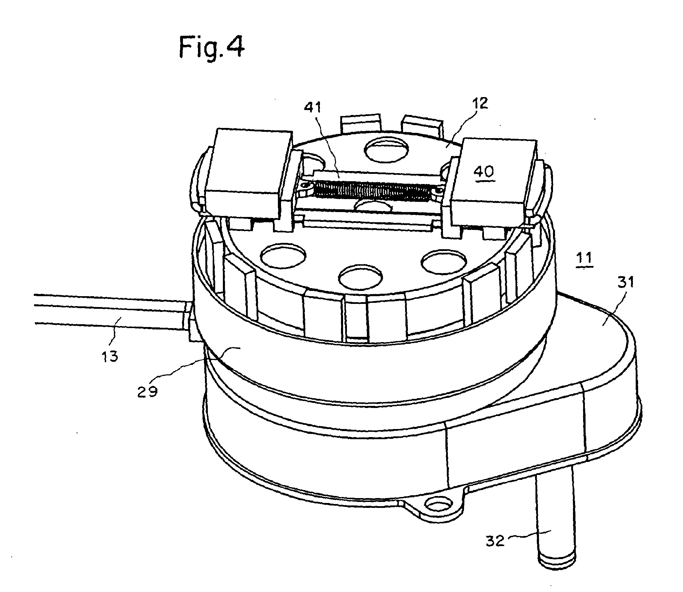

Dadurch, dass die Fliehkraftbremse 6 bzw. 20 bzw. 40 (Fig. 4) direkt auf dem Läufer 12 angeordnet ist, wird eine Begrenzung der Drehzahl des Elektromotors 2 auf Werte unterhalb einer Grenze ermöglicht, bei der störende Schwingungen und Geräusche entstehen. Zudem wird auch ein platzsparender Aufbau des Stellantriebs 1 ermöglicht.

Bei der Auswahl der Werkstoffe für die Fliehkraftbremse 6 bzw. 20 bzw. 40 ist darauf zu achten, dass die magnetische Wirkungsweise des Läufers 12 durch die Werkstoffe der Fliehkraftbremse 6 bzw. 20 bzw. 40 und deren Anordnung auf dem Läufer 12 nicht gestört wird.

## Patentansprüche

1. Antriebsvorrichtung zur Betätigung eines Stellglieds (8),
mit einem einen Läufer (12) aufweisenden Elektromotor (2), einem Energiespeicher (3) und einer Fliehkraftbremse (6; 20; 40), wobei das Stellglied (8) in einer ersten Bewegungsrichtung durch den eingeschalteten Elektromotor (2) und in einer zweiten Bewegungsrichtung durch den Energiespeicher (3) betätigbar ist,
**dadurch gekennzeichnet,**
**dass** ein Bremskörper (22; 42; 43) der Fliehkraftbremse (6; 20; 40) am Läufer (12) des Elektromotors (2) angeordnet ist.

2. Antriebsvorrichtung nach Anspruch 1, **dadurch gekennzeichnet,**
**dass** ein Teil der Abdeckung des Elektromotors (2) als Bremstrommel (30) der Fliehkraftbremse (6; 20; 40) ausgestattet ist.

3. Antriebsvorrichtung nach einem vorangehenden Anspruch, **dadurch gekennzeichnet, dass** die Betätigung des Stellglieds (8) in der ersten Bewegungsrichtung über wenigstens eine Getriebestufe (4) gelenkt ist.

4. Antriebsvorrichtung nach einem vorangehenden Anspruch, **dadurch gekennzeichnet, dass** der Energiespeicher (3) durch eine vom Elektromotor (2) beim Betätigen des Stellglieds (8) in der ersten Bewegungsrichtung spannbaren Feder (3) verwirklicht ist.

5. Antriebsvorrichtung nach Anspruch 4, **dadurch gekennzeichnet, dass** die Feder (3) über wenigstens eine Getriebestufe (4; 33, 34) mit dem Elektromotor (2) mechanisch gekoppelt ist.

6. Stellglied mit einer Antriebsvorrichtung nach einem der Ansprüche 1 bis 5.

7. Synchronmotor für eine Antriebsvorrichtung zur Betätigung eines Stellglieds (8), **gekennzeichnet durch** einen Läufer, auf dem ein Bremskörper (22; 42; 43) einer Fliehkraftbremse (6; 20; 40) angeordnet ist.

8. Elektromotor für eine Antriebsvorrichtung nach einem der Ansprüche 1 bis 5.

## Claims

1. Drive device for activating an actuating element (8), having an electric motor (2) comprising a rotor (12), an energy storage device (3) and a centrifugal brake (6; 20; 40), with the actuating element (8) being activatable in a first direction of movement by the switched-on electric motor (2) and in a second direction of movement by the energy storage device (3),
**characterised in that**
a braking element (22; 42; 43) of the centrifugal brake (6; 20; 40) is arranged on the rotor (12) of the electric motor (2) .

2. Drive device according to claim 1, **characterised in that** a part of the cover of the electric motor (2) is embodied as a brake drum (30) of the centrifugal brake (6; 20; 40).

3. Drive device according to a preceding claim, **characterised in that** the activation of the actuating element (8) in the first direction of movement is controlled by way of at least one gear (4).

4. Drive device according to a preceding claim, **characterised in that** the energy storage device (3) is implemented by means of a spring (3) which can be stretched in the first direction of movement by the electric motor (2) upon activation of the actuating element (8).

5. Drive device according to claim 4, **characterised in that** the spring (3) is coupled mechanically to the electric motor (2) by way of at least one gear (4; 33; 34).

6. Actuating element having a drive device according to one of claims 1 to 5.

7. Synchronous motor for a drive device for activating an actuating element (8), **characterised by** a rotor, on which a braking element (22; 42; 43) of a centrifugal brake (6; 20; 40) is arranged.

8. Electric motor for a drive device according to one of claims 1 to 5.

## Revendications

1. Dispositif d'entraînement pour l'actionnement d'un actionneur (8), comprenant un moteur électrique (2) pourvu d'un rotor (12), un accumulateur d'énergie (3) et un frein centrifuge (6 ; 20 ; 40), l'actionneur (8) pouvant être actionné dans une première direction de mouvement par le moteur électrique (2) en marche et dans une seconde direction de mouvement par l'accumulateur d'énergie (3), **caractérisé en ce qu'**un corps de freinage (22 ; 42 ; 43) du frein centrifuge (6 ; 20 ; 40) est situé sur le rotor (12) du moteur électrique (2) .

2. Dispositif d'entraînement selon la revendication 1, **caractérisé en ce qu'**une partie du recouvrement du moteur électrique (2) est exécutée en tant que tambour de frein (30) du frein centrifuge (6 ; 20 ; 40).

3. Dispositif d'entraînement selon l'une des revendications précédentes, **caractérisé en ce que** l'actionnement de l'actionneur (8) dans la première direction de mouvement est commandé par le biais d'au moins un étage de transmission (4).

4. Dispositif d'entraînement selon l'une des revendications précédentes, **caractérisé en ce que** l'accumulateur d'énergie (3) est réalisé par un ressort (3) pouvant être tendu par le moteur électrique (2) lors de l'actionnement de l'actionneur (8) dans la première direction de mouvement.

5. Dispositif d'entraînement selon la revendication 4, **caractérisé en ce que** le ressort (3) est couplé mécaniquement au moteur électrique (2) par le biais d'au moins un étage de transmission (4 ; 33, 34).

6. Actionneur pourvu d'un dispositif d'entraînement selon l'une des revendications 1 à 5.

7. Moteur synchrone pour un dispositif d'entraînement servant à actionner un actionneur (8), **caractérisé par** un rotor sur lequel est situé un corps de freinage (22 ; 42 ; 43) d'un frein centrifuge (6 ; 20 ; 40).

8. Moteur électrique pour un dispositif d'entraînement selon l'une des revendications 1 à 5.
